(19) Europäisches Patentamt / European Patent Office / Office européen des brevets

(11) **EP 1 970 406 B1**

(12) **EUROPEAN PATENT SPECIFICATION**

(45) Date of publication and mention
of the grant of the patent:
**23.10.2013 Bulletin 2013/43**

(51) Int Cl.:
**C08L 23/26** (2006.01)    **C08K 9/04** (2006.01)
**H01M 2/02** (2006.01)

(21) Application number: **06843468.7**

(22) Date of filing: **27.12.2006**

(86) International application number:
**PCT/JP2006/326086**

(87) International publication number:
**WO 2007/077881 (12.07.2007 Gazette 2007/28)**

(54) **IONOMER RESIN COMPOSITION AND THERMALLY SHRINKABLE TUBE MADE FROM THE SAME**

IONOMERHARZZUSAMMENSETZUNG UND DARAUS HERGESTELLTES WÄRMESCHRUMPFBARES ROHR

COMPOSITION DE RESINE IONOMERE ET TUBE THERMORETRACTABLE L'UTILISANT

(84) Designated Contracting States:
**DE FR GB IT NL**

(30) Priority: **05.01.2006 JP 2006000404**
**19.07.2006 JP 2006196405**

(43) Date of publication of application:
**17.09.2008 Bulletin 2008/38**

(73) Proprietor: **Sumitomo Electric Industries, Ltd.**
**Osaka-shi, Osaka 541-0041 (JP)**

(72) Inventors:
• **NISHIKAWA, Shinya**
**Osaka 5540024 (JP)**
• **HAYAMI, Hiroshi**
**Osaka 5540024 (JP)**

• **YAMASAKI, Satoshi**
**Osaka 5540024 (JP)**

(74) Representative: **Cross, Rupert Edward Blount**
**Boult Wade Tennant**
**Verulam Gardens**
**70 Gray's Inn Road**
**London WC1X 8BT (GB)**

(56) References cited:
**WO-A1-2004/063264    WO-A1-2004/099316**
**WO-A1-2006/080716    JP-A- 1 208 706**
**JP-A- 8 259 704    JP-A- 11 170 365**
**JP-A- 11 181 190    JP-A- 2002 194 109**
**JP-A- 2005 521 768    US-A- 6 117 932**

**Description**

Technical Field

The present invention relates to a novel ionomer resin composition, an extrusion shaped article using the ionomer resin composition, and a heat-shrinkable tube using the ionomer resin composition.

As compared with a nickel cadmium battery or a nickel metal hydride battery, a lithium-ion battery has superior characteristics: small-size and light-weight in terms of an equivalent energy amount; less deterioration of cell due to additional charges; and superior low-temperature properties. Therefore, the lithium-ion battery is widely used as a cell for portable electronic equipment.

The lithium-ion battery has various shapes such as a cylindrical form, an angular form. A cell of cylindrical type is suitable for a large-volume battery, ranging 2100 to 2400 mAh, for example, and an angular-type cell is suitable for a thin-shaped battery. An iron can is generally used as a case of the cylindrical type cell, and the iron can also functions as a negative pole. On the other hand, an aluminum can is used as an angle-type case, and the can also functions as a positive pole.

Therefore, the outer periphery of a cylindrical type or angular type can of lithium- ion battery is covered with a heat- shrinkable tube for the purpose of providing functions such as an electrical insulation, a protective layer, a printing layer. Since propylene carbonate or diethylcarbonate is generally used for an electrolyte of the lithium- ion battery, an ethylene ionomer resin, which is superior in terms of chemical resistance to such electrolytic solution, is widely used as a material of a heat- shrinkable tube for the lithium- ion battery. For example, Patent document 1 discloses a cross-linked tube and a heat- shrinkable tube, which are made of a resin composition consisting of an ionomer resin and a plasticizing agent, the ionomer resin having a structure in which molecules of copolymer of ethylene and acrylic acids or methacrylic acids are cross- linked with metal ions, and the amount of the plasticizing agent contained in the ionomer resin being 2 to 20 weight %.

Since the above-mentioned heat-shrinkable tube is inserted over a lithium-ion battery with an automatic covering and heat-shrinking machine and is subjected to thermal contraction in a heat-shrinkage process, the heat-shrinkable tube must have rigidity necessary for supporting itself while the heat-shrinkable tube has a cross sectional round shape. Also, it is necessary to make the temperature of the heat shrinking process as low as possible so as not to cause the lithium cell to suffer from thermal damage, and it is required to accomplish the thermal contraction generally at a temperature of 120°C or less.

The heat-shrinkable tube tends to shrink not only in a radial direction but also in a longitudinal direction at a process of heat-shrinkage. If the contraction ratio of the longitudinal direction is large, a defect such as the end of a cell not being covered will be caused. Therefore, the contraction ratio of the longitudinal direction must be equal to or less than 5 %. Also, there has been a strong demand for decreasing the wall thickness of a heat-shrinkable tube, and the heat-shrinkable tube must have a wall thickness of 100 $\mu$ m or less upon its application as a covering.

However, if the thickness is made equal to or less than 100 $\mu$m in the case of a conventional heat- shrinkable tube in which ethylene ionomer resin is used, the rigidity of the tube decreases to be insufficient such that, if the tube is placed horizontally in the condition in which only one end of the tube is supported, for example, the tube tend to bend, causing the opening to be closed, which results in difficulty in processing by the automatic covering and heat- shrinking machine.

WO 2004 /099316 A1 discloses polymer-nanocomposite blends. US 6, 117, 932 discloses a resin composite. WO 2006/080716 A1 discloses a tube container having barrier property. JP 8259704 discloses a crosslinked tube and heat-shrinkable tube.
Patent document 1: Japanese Patent Application Publication No. H8-259704

Disclosure of the Invention

Problem to be solved by the Invention

An object of the present invention is to provide a heat-shrinkable tube which has rigidity capable of allowing an automatic machine to perform covering and heat-shrinkage processes for a lithium-ion battery that is to be covered therewith, and which allows the heat-shrinkage process to be completed at a low temperature of 120°C or less, and which has superior resistance to an electrolytic solution. Another object of the present invention is to provide an ethylene ionomer resin composition that can be used as a suitable material of such heat-shrinkable tube.

Means for solving the problem to be solved

The present invention was completed as a result of intensive studies and examinations by the present inventor about the above-mentioned problem, and its finding that a heat-shrinkable tube made of an ionomer resin composition which comprises an ethylene ionomer resin and organo clay dispersed therein has rigidity that is sufficient for performing the covering and heat-shrinkage processes by an automatic covering and heat-shrinking machine, even if the wall thickness of the heat-shrinkable tube is made thinner, and that the contraction process thereof can be completed at a temperature of 120°C or less, and that the heat-shrinkable tube has superior resistance to an electrolytic solution.

That is, the present invention provides an ionomer resin composition according to claim 1 of the claims appended hereto. A resin composition having high rigidity can be obtained by dispersing the organo-clay in an ethylene ionomer resin.

In this case, it is essential that the content of organo clay be 2 % by weight or more and 60 % by weight or less in the whole ionomer resin composition, because the compatibility of the rigidity improvement effect and extrusion properties can be achieved if the content of organo clay is within such range. Also, if an organic compound for the intercalation of the organo clay is either or both of dimethyl distearyl ammonium chloride and benzyl dimethyl stearyl ammonium chloride, there is an effect that the rigidity can be improved under the condition in which the transparency of the ethylene ionomer resin is maintained.

Moreover, the present invention provides an extrusion shaped article produced by extruding the above-mentioned ionomer resin composition. According to the present invention, an extrusion shaped article having high rigidity and superior resistance to an electrolytic solution can be obtained. Also, by extruding the ionomer resin composition in a tubular form, a tubular shaped article having the above-mentioned characteristics can be obtained.

Moreover, the present invention provides a heat-shrinkable tube which is characterized in that the above-mentioned tubular shaped article is expanded in a radial direction under heated conditions and the so-expanded shape is fixed by cooling. Such heat-shrinkable tube has rigidity which allows the covering and contraction processes to be performed by an automatic covering and heat-shrinking machine even if the wall thickness of the heat-shrinkable tube is made thinner, and moreover the contraction thereof can be completed at 120°C or lower.

Also, the heat-shrinkable tube is characterized in that after the tubular shaped article is irradiated by ionizing radiation so as to achieve cross-linking of the ionomer resin composition, the heat-shrinkable tube is expanded in a radial direction under heated conditions and the so-expanded shape is fixed by cooling. The heat-shrinkable tube produced in such manner has superior heat resistance and has an effect that the contraction thereof in the longitudinal direction is less in the contraction processing.

Advantageous Effect of the Invention

According to the present invention, an extrusion shaped article having high rigidity and superior resistance to an electrolytic solution can be obtained. Also, the heat-shrinkable tube of the present invention has rigidity with which the contraction process can be performed by an automatic covering and heat-shrinking machine even if the wall thickness of the tube is made thinner. Moreover, the heat-shrinkable tube has superior resistance to an electrolytic solution, and the shrinkage thereof can be accomplished at a temperature of 120°C or less.

Best Mode for Carrying out the Invention

First, an explanation will be given regarding the resin composition of the present invention. The ethylene ionomer resin to be used in the present invention is a resin in which the molecules of ethylene copolymers such as ethylene-methacrylic acid copolymers or ethylene-acrylic acid copolymers are pseudo-crosslinked with metal ions such as zinc ion, potassium ion, sodium ion, magnesium ion. Such ethylene ionomer resins to be used may be those marketed under the trade name of Surlyn, Himilan.

The ionomer resin compositions of the present invention include not only resin compositions obtained by mixing the above-mentioned ethylene ionomer resins and organo clay, but also resin compositions obtained by mixing metal salts, organo clay, and ethylene copolymers having carboxyl groups in the molecules. If the metal salts and the ethylene copolymers having the carboxyl groups are mixed, the carboxyl groups are neutralized by the metal ions and become carboxylate ions, forming salts with the metal ions. The association of a plurality of carboxylate ions and the metal ions causes the ethylene copolymers to be pseudo-crosslinked to become ionomer resins.

Examples of ethylene copolymers having carboxyl groups in the molecules are a copolymer of ethylene and acrylic monomer having carboxyl groups such as acrylic acids and methacrylic acids and a copolymer of ethylene and acid anhydride monomer such as maleic anhydride. These copolymers can be produced by a known method such as a copolymerization method, a graft polymerization method, and, in addition, other monomer can appropriately be copolymerized so that various characteristics may be improved.

The content of the carboxyl groups in the above-mentioned ethylene copolymers having carboxyl groups in the molecules is in the range of 0.5 to 50 mol%, and more preferably 1 to 30 mol%. If it is less than 0.5 mol%, the rigidity and the extrusion workability of the resin composition decrease, and if it is more than 50 mol%, the resistance to an electrolytic solution decreases.

A part or all of carboxylic acids in an ionomer resin composition are neutralized by the metal ions in the metal salt or organo clay. Preferably, 55 % or more of the carboxyl groups in the ionomer resin composition are neutralized so that high rigidity may be achieved. The neutralization degree of carboxyl groups is a ratio of the quantity of ionized carboxyl groups (carboxylate ions) to the total quantity of carboxyl groups in the ionomer resin composition, and can be measured by infrared absorption spectrum (IR) measurement. The carboxyl groups have C=O bond stretching-absorption peak near 1700 $cm^{-1}$. However, this peak disappears when the carboxyl groups are neutralized with the metal ions and become carboxylate ions. Also, when the carboxylate ions which have been neutralized with the metal ions are treated with hydrochloric acids, which are strong acids, the metal ions are separated to return to the original carboxyl groups, and the C=O bond stretching-absorption peak is restored. By measuring the C=O bond stretching-absorption peak of the ionomer resin composition, the quantity of unionized carboxyl groups can be measured, and by measuring the C=O bond stretching-absorption peak of the ionomer resin composition treated with hydrochloric acid, the quantity of the carboxyl groups of the entire ionomer resin composition can be measured. The neutralization degree can be determined by measuring both of those C=O bond stretching-absorption peaks. More specifically, the neutralization degree is calculated by the following formula:

$$\text{Neutralization degree (\%)} = (1 - A_1/A_2) \times 100$$

$A_1$: height of the C=O bond stretching-absorption peak of the ionomer resin composition
$A_2$: height of the C=O bond stretching-absorption peak of the ionomer resin composition treated with hydrochloric acid

The metal salts which can be used for neutralizing ethylene copolymers having carboxyl groups in the molecules are metal oxide, metalhydroxide, metal carboxylate, including, for example, zinc oxide, magnesium oxide, magnesium hydroxide, sodium hydroxide, sodium hydrogencarbonate, calcium oxide, calcium hydroxide, calcium carbonate. It is preferable that the metal ions which neutralize carboxyl groups be at least one kind selected from the group consisting of zinc ion, sodium ion, magnesium ion and calcium ion, since superior transparency of the resin composition can be obtained in such case. Also, it is preferable that the mixing quantity of the metal salts be 1 weight % or more and 10 weight % or less, relative to 100 weight parts of ethylene copolymer having carboxyl groups, since superior transparency can be obtained in such case.

The organo clay to be used in the present invention is layered silicate (clay), such as montmorillonite, in which an organic compound is intercalated between layers of planes thereof. Interlayer cation such as sodium ion or calcium ion exists between layered silicate planes, and thus layered crystal structure is maintained. Through ion exchange of the interlayer cation with organo cation, an organic compound combines with the silicate plane surface chemically and is introduced (intercalated) between the layers.

The intercalation of an organic compound between the layers causes an increase in the distance between layers of the silicate planes, thereby improving the dispersibility of the organo clay into an organic substance. Also, in the case of the organo clay, the dispersibility further improves because of its characteristic of swelling, since the distance between layers increases in an organic solvent, although in the case of untreated clay, the distance between layers does not change in the organic solvent. As for such organo clays, those marketed under the trade name of Nanofil, S-BEN. can be used.

The organic compounds that may be intercalated between the layers are, for example, quaternary ammonium ions such as dimethyl distearyl ammonium chloride, benzyl dimethyl stearyl ammonium chloride. The organo clays in which dimethyl distearyl ammonium chloride or benzyl dimethyl stearyl ammonium chloride is intercalated has superior dispersibility to ethylene ionomer resin, and has an effect of improving the rigidity of an ethylene ionomer resin while maintaining the transparency thereof. Since the transparency of the ethylene ionomer resin is maintained, the organo clay in which the dimethyl distearyl ammonium chloride or benzyl dimethyl stearyl ammonium chloride is intercalated is considered to minutely disperse on the order of nanometer.

Also, in the above- mentioned organo clays, the ethylene ionomer resin exhibits particularly conspicuous effect of compatibility of improvement of the rigidity and maintenance of the transparency. It was found that even if the organo clay is dispersed in an ethylene resin having no ionomer structure, such as polyethylene, ethylene vinyl acetate copolymer, or ethylene ethylacrylate, the effect of improvement in the rigidity is hardly recognized and also the transparency decreases.

Preferably, the content of the organo clay is 2 weight % or more and 60 weight % or less with respect to the whole ionomer resin composition. If it is 2 weight % or less, the rigidity improvement effect is less, and when the wall thickness of a tube is made thinner, the processing with an automatic contraction processing machine becomes difficult. Also, if it is more than 60 weight %, the melt viscosity of the ionomer resin composition becomes higher, which results in poor extrusion properties. The more preferable range of the organo clay content is 2 weight % or more and 40 weight % or less.

Moreover, it is possible to mix, as needed, in an ionomer resin composition of the present invention, polyfunctional monomer, such as trimethylolpropanetrimethacrylate or triallylisocyanurate, and various kinds of addition agents such as an antioxidant, flame retardant, ultraviolet absorber, light stabilizer, heat stabilizer, lubricant, coloring agent. These materials can be mixed using known mixing equipment such as an open roll mixer, a pressure kneader, a single screw mixer, or a twin screw mixer, and preferably, they are melt blended at a temperature equal to or higher than a melting point of an ethylene ionomer resin.

When an ionomer resin composition is made by mixing organo clay, a metal salt, and an ethylene copolymer having a carboxyl group in the molecule, it is preferable to melt and blend these materials altogether. For example, a resin composition made by simultaneously melt-blending metal salts, organo clay, and ethylene copolymers having carboxyl groups in the molecules has higher rigidity and superior extrusion properties in the case of a thin wall, as compared with a resin composition made by melt-blending metal salts and ethylene copolymers having carboxyl groups in the molecules at first and thereafter by melt-blending organo clay therewith.

The above-mentioned ionomer resin composition can be extruded using a known melt-extrusion molding machine to produce an extrusion shaped article. Also, a tubular extrusion shaped article can be obtained by extruding the above-mentioned ionomer resin composition in a tubular form.

Also, it is possible to produce a heat-shrinkable tube by the steps of heating the above-mentioned tubular extrusion shaped article at a temperature of melting point or higher, expanding the tubular shaped article to a predetermined outer diameter by a method such as introducing compression air into the tubular space thereof and subsequently cooling it so as to fix the shape thereof. Moreover, it is possible to obtain a heat-shrinkable tube by performing the similar steps after irradiating an ionizing radiation to the above tubular shaped article so as to cross-link the ionomer resin composition. The heat-shrinkable tube which has been irradiated with ionizing radiation has superior heat resistance and does not melt when exposed to high temperature. Also, the longitudinal contraction thereof caused in a contraction process is less, and moreover, it has an effect of improvement in terms of resistance to an electrolytic solution.

Examples of the ionizing radiation sources are electron beams, gamma rays, X-rays, alpha rays, ultraviolet rays, and the electron beams can be used most preferably from the viewpoint of industrial application, such as ease in the use of a radiation source, the penetration thickness of ionizing radiation, and the speed of cross linking processing.

The acceleration voltage of electron beams may appropriately be determined depending on the wall thickness of the tube. For example, in the case of a tube having a thickness of 50 $\mu$m to 200 $\mu$m, the acceleration voltage may be selected between 50 kV and 300 kV. A sufficient degree of cross linking will be achieved with a dose of 30 - 500 kGy.

Next, the best embodiment of the invention will be described with reference to Examples. These examples are not intended to limit the scope of the present invention.

Examples

(Examples 1 to 6)

(Preparation of pellets of ionomer resin composition)

An ethylene ionomer resin, organo clay, and an antioxidant were melt and blended according to the combination recipe shown in Table I. Pellets were prepared by a pelletizer after the melt blending had been made using a twin screw mixer (30 mm $\Phi$, L/D = 30) at a barrel temperature of 160°C and a screw rotation rate of 100 r/min.

(Preparation of tubular shaped articles)

The above-mentioned ionomer resin composition was formed into a tubular extruded article having a caliber of 10mm $\Phi$ and a wall thickness of 0.1 mm using a single-screw melt extruder (45 mm $\Phi$, L/D = 24).

(Preparation of heat-shrinkable tubes)

The tubular shaped articles thus obtained were heated in a gearoven of 120 °C, and compression air was introduced inside the tubes so that their caliber was expanded to 20 mm$\Phi$. Subsequently, in such state as the compression air was introduced, they were removed from the gearoven and then cooled. Thus, heat-shrinkable tubes were obtained. Also, the above-mentioned tubes having the caliber of 10 mm$\Phi$ and the wall thickness of 0.1 mm were irradiated with electron beams at an acceleration voltage of 300 kV so as to cross-link the ionomer resin compositions. Thereafter, they were heated in a gearoven of 140°C, and compression air was introduced inside the tubes to expand the caliber to 200 mm$\Phi$. Subsequently, in such state as the compression air was introduced, they were removed from the gearoven and cooled. Thus, heat-shrinkable cross-linked tubes were obtained.

(Evaluation of the heat-shrinkable tubes: contraction temperature)

The heat-shrinkable tubes thus obtained were left in a gearoven of 50 °C for 3 minutes and the caliber of the tubes was measured. Thereafter, the temperature was raised by 10 °C each time and the tubes were left for 3 minutes under the conditions, and their calibers (A) were measured.
The contraction temperature was defined as a temperature at which the contraction ratio becomes 80 % as determined by the following formula, and the measured samples having a contraction temperature of 110 °C or less were judged to be acceptable.

$$\text{Contraction ratio (\%)} = 100 \times (1 - (A - B)/(C - B))$$

where,
A: caliber (mm) after heating
B: caliber (mm) of an extruded tube
C: caliber (mm) of the extruded tube after expansion

(Evaluation of the heat-shrinkable tubes: elastic modulus)

The heat-shrinkable tubes were cut into pieces of 10 cm in length, and were subjected to a tension test at a tension speed of 100 mm/minute with a gauge length of 20 mm, and their elastic modulus was obtained from the stress-strain curve.

(Evaluation of the heat-shrinkable tubes: rigidity test)

The heat-shrinkable tubes were cut into pieces of 70 mm in length, and then the tubes were put under the conditions where one end thereof was supported so that they might be placed horizontally. Under such conditions, the tubes that can self-support so as to have a cross sectional round shape were determined as acceptable.

(Evaluation of the heat-shrinkable tubes: contraction ratio in the longitudinal direction)

The heat-shrinkable tubes thus prepared were cut into pieces of 10 cm in length, and heated at 150 °C for 10 minutes. Thus, their lengths before and after the heating were measured so that their contraction ratio in the longitudinal direction were obtained. The tubes that had contraction ratio of 5 % or less in the longitudinal direction were judged as acceptable.

(Evaluation of the heat-shrinkable tubes: resistance to electrolytic solutions)

After immersing heat-shrinkable tubes in a propylene carbonate solution at room temperature for one day, the rate of increase in the weight was measured. The tubes exhibiting weight increase of less than 10 % were judged to be acceptable. Also, a similar test was performed with respect to diethylcarbonate.

(Evaluation of the heat-shrinkable tubes: heat resistance test)

The heat-shrinkable tubes were heated at 300 °C for 5 minutes, and those which have maintained a tubular shape were determined as acceptable.

(Evaluation of the heat-shrinkable tubes: transparency)

The heat-shrinkable tubes were contraction-covered over a metallic stick of 13 mmΦ, and those through which characters of 2 mm by 2mm printed on the metallic stick could be distinguished were judged to be acceptable. The results of the above-mentioned tests are shown in Table I.

(Comparative Examples 1 to 6)

A series of evaluation were performed with respect to the heat-shrinkable tubes which were prepared in the same manner as Examples 1 to 6 except that the resin compositions having the combination formula shown in Table II were used. The results of the evaluation are shown in Table II.

Table I

| | | Example 1 | Example 2 | Example 3 | Example 4 | Example 5 | Example 6 |
|---|---|---|---|---|---|---|---|
| Combination | Ethylene ionomer resin ①*1) | 90 | 96 | 60 | | | 98 |
| | Ethylene ionomer resin ②*2) | | | | 85 | 70 | |
| | Organo clay ① * 7) | | | 40 | | 30 | |
| | Organo clay ② * 8) | 10 | 6 | | 15 | | 2 |
| | Antioxidant * 9) | | 0.5 | 0.6 | 0.5 | 0.5 | 0.6 |
| | Dose of electron irradiation (kGy) | no irradiation | 200 | 150 | 200 | 260 | ? |
| Property | Contraction temperature (°C) | 90 | 90 | 100 | 90 | 100 | 90 |
| | Elastic modulus(MPa) | 380 | 400 | 800 | 460 | 650 | 350 |
| | Rigidity test | acceptance | acceptance | acceptance | acceptance | acceptance | acceptance |
| | Contraction ratio in the longitudinal direction (%) | 6 | 2 | 3 | 3 | 2 | 5 |
| | Resistance to electrolytic solutions | acceptable | acceptable | acceptable | acceptable | acceptable | acceptable |
| | heat resistance test | melting | acceptable | acceptable | acceptable | acceptable | acceptable |
| | transparency | acceptable | acceptable | acceptable | acceptable | acceptable | acceptable |

Table II

|  |  | Comparative Example 1 | Comparative Example 2 | Comparative Example 3 | Comparative Example 4 | Comparative Example 5 | Comparative Example 6 |
|---|---|---|---|---|---|---|---|
|  | Ethylene ionomer resin ①*1) | 99 | 35 |  |  |  |  |
|  | LDPE ①*3) |  |  | 90 |  |  |  |
|  | EVA ②*4) |  |  |  | 80 |  |  |
|  | PVC *5) |  |  |  |  | 100 |  |
|  | Polystyrene resin *6) |  |  |  |  |  | 100 |
|  | Organo clay ①*7) | 1 | 65 | 10 |  |  |  |
|  | Organo clay ②*8) |  |  |  | 20 |  |  |
|  | Antioxidant *9) | 0.5 | 0.5 | 0.5 | 0.5 | 0.5 | 0.5 |
|  | Dose of electron irradiation (kGy) | 200 |  | 200 | 200 | no irradiation | no irradiation |

EP 1 970 406 B1

9

(continued)

|  |  | Comparative Example 1 | Comparative Example 2 | Comparative Example 3 | Comparative Example 4 | Comparative Example 5 | Comparative Example 6 |
|---|---|---|---|---|---|---|---|
| Property | Contraction temperature (°C) | 90 | difficulty of extrusion | 110 | 100 | 90 | 100 |
|  | Elastic modulus (MPa) | 200 |  | 300 | 300 | 1600 | 1300 |
|  | Rigidity test | failure |  | failure | failure | acceptance | acceptance |
|  | Contraction ratio in the longitudinal direction (%) | 3 |  | 3 | 4 | 15 | 13 |
|  | Resistance to electrolytic solutions | acceptable |  | acceptable | acceptable | unacceptable | unacceptable |
|  | heat resistance test | acceptable |  | acceptable | acceptable | melting | melting |
|  | transparency | acceptable |  | unacceptable | unacceptable | acceptable | acceptable |

(Footnote)
(*1) Ethylene ionomer resin: Himilan (registered trademark) 1707, made by DuPont Mitsui Polychemicals Co., Ltd.
(*2) Ethylene ionomer resin: Himilan (registered trademark) 1706, made by DuPont Mitsui Polychemicals Co., Ltd.
(*3) Low-density polyethylene resin: Sumikathene (registered trademark) C215, made by Sumitomo Mitsui Polyolefin Co., Ltd.
(*4) Ethylene vinyl acetate copolymer: EVATATE (registered trademark) D2010F, made by Sumitomo Chemical Co., Ltd.
(*5) Polyvinyl chloride compound: Polyvin (registered trademark) compound 4018, made by PLAS-TECH CORPORATION.
(*6) Polystyrene resin: Japan Polysty (registered trademark) 690N, made by Japan Polystyrene Inc.
(*7) Organo clay (Organic compound for intercalation: dimethyl distearyl ammonium chloride, particle size: 25 $\mu$m): Nanofil 15, made by Sud-Chemie Inc.
(*8) Organo clay (Organic compound for intercalation: benzyl dimethyl distearyl ammonium chloride, particle size: 8 $\mu$m): Nanofil 9, made by Sud-Chemie Inc.
(*9) Antioxidant: IRGANOX 1010, made by Chiba Specialities Chemicals (Incorporated).

As can be seen from Table I, the heat-shrinkable tubes in which ionomer resin compositions of the present invention are used exhibit superior properties with respect to contraction temperature, rigidity test, longitudinal contraction ratio, resistance to an electrolytic solution, and transparency. Example 1 shows those which were not subjected to the irradiation of electron beams. They exhibited acceptable properties with respect to all evaluation items except the heat resistance test of 300°C $\times$ 5 minutes, in which samples melted.

Comparative Example 1 is the case in which the heat-shrinkable tube used an ethylene ionomer resin composition having organo clay of 1 weight %. In this case, the test results of the tubes were all acceptable except the rigidity test in which it bent, resulting in failure. Also, in Comparative Example 2, in which the ionomer resin composition had 65 weight % of organo clay, the melt viscosity was too high, resulting in difficulty of tubular extrusion.

In Comparative Example 3, the heat-shrinkable tube used a resin composition in which low-density polyethylene and organo clay were mixed. The low-density polyethylene failed to achieve minute dispersion of organo clay, resulting in poor transparency Also, the rigidity improvement effect was not recognized as the tube bent in the rigidity test, resulting in failure.

In Comparative Example 4, the heat-shrinkable tube used the resin composition in which ethylene vinyl acetate copolymer and organo clay were mixed. As in Comparative Example 3, organo clay could not minutely be dispersed, and the transparency and the rigidity test both resulted in failure.

Comparative Example 5 is the case in which the heat-shrinkable tube used a polyvinyl chloride compound, and Comparative Example 6 is the case where the heat-shrinkable tube used polystyrene. These materials exhibited superior properties with respect to transparency and rigidity, but resulted in failure with respect to heat resistance, resistance to an electrolytic solution, and longitudinal contraction ratio.

[Examples 7 to 20, Comparative Examples 7 and 8]

(Preparation of pellets of ionomer resin compositions)

According to the combination formulas shown in Tables III and IV, ethylene ionomer resins, ethylene copolymers, metal salts, organo clay, and antioxidants were melt blended. After the melt blending was performed using a twin screw mixer (26 mm $\Phi$, L/D = 30) at a barrel temperature of 200 °C and screw rotations of 100 r/min, the pellets were prepared using a pelletizer.

(Evaluation of the pellets of ionomer resin compositions: degree of neutralization)

The infrared absorption spectrum of the ionomer resin composition thus prepared was measured with the ATR method. In order to reduce the measurement error, the peak height of 1700 cm$^{-1}$ (C = O bond stretching) was divided by the peak height of 2915 cm$^{-1}$ (CH2 bond stretching) and the value thus obtained was defined as $A_1$. Likewise, the infrared absorption spectrum of the samples in which the ionomer resin compositions were treated with hydrochloric acids was measured to obtain $A_2$, and the neutralization degree of ionomer resin compositions was calculated by the following formula.

$$\text{Neutralization degree (\%)} = (1 - A_1/A_2) \times 100$$

(Evaluation of the ionomer resin compositions: extrusion line speed)

The ionomer resin compositions thus prepared were extruded in a tubular shape having a caliber of 10 mm $\Phi$ and a wall thickness of 0.1 mm, using a single-screw melt extruder (45 mm $\Phi$, IJD = 24). The extrusion speed was increased gradually, and the take-up speed was measured when the stable formation became possible.

(Preparation and evaluation of heat-shrinkable tubes)

Heat-shrinkable tubes were prepared and a series of evaluation thereof were performed as in Examples 1 to 6. The evaluation of elongation was conducted by means of a tension test in a similar manner as the measurement of elastic modulus, and the percentage elongation at fracture was measured with respect to three sample pieces and the average of the measured values was obtained. The results are shown in Tables III and IV.

Table III

| | | Example 7 | Example 8 | Example 9 | Example 10 | Example 11 | Example 12 | Example 13 | Example 14 |
|---|---|---|---|---|---|---|---|---|---|
| Combination | Ethylene ionomer resin ①*1) | | 100 | | | | | | |
| | Ethylene ionomer resin ②*2) | 100 | | 100 | 100 | 100 | 100 | 100 | 100 |
| | EMAA *10) | | | | | | | | |
| | EMMA *11) | | | | | | | | |
| | EAA +12) | | | | | | | | |
| | Organo clay ①*7) | 10 | 10 | 2 | 60 | | | 10 | 10 |
| | Organo clay ②*13) | | | | | 10 | | | |
| | Organo clay ③*14) | | | | | | 10 | | |
| | Organo clay ④* 15) | | | | | | | | |
| | Zinc oxide * 16) | | | | | | | 1 | |
| | magnesium hydroxide * 17) | | | | | | | | 1 |
| | Antioxidant * 9) | 1 | 1 | 1 | 1 | 1 | 1 | 1 | 1 |

| | | Example 7 | Example 8 | Example 9 | Example 10 | Example 11 | Example 12 | Example 13 | Example 14 |
|---|---|---|---|---|---|---|---|---|---|
| Property | Neutralization degree | 55% | 70% | 55% | 55% | 55% | 55% | 65% | 70% |
| | Extrusion line speed (m/min) | 150 | 150 | 150 | 150 | 150 | 150 | 180 | 180 |
| | Contraction temperature (°C) | 90 | 90 | 90 | 100 | 90 | 90 | 90 | 90 |
| | Elastic modulus MPa | 400 | 410 | 340 | 800 | 390 | 390 | 420 | 430 |
| | Elongation (%) | 360 | 330 | 390 | 230 | 360 | 320 | 320 | 330 |
| | Rigidity test | acceptance | acceptance | acceptance | acceptance | acceptance | acceptance | acceptance | acceptance |
| | Contraction ratio in the longitudinal direction (%) | 2 | 3 | 4 | 1 | 3 | 2 | 2 | 2 |
| | Resistance to Electrolytic solutions | acceptable | acceptable | acceptable | acceptable | acceptable | acceptable | acceptable | acceptable |
| | transparency | acceptable | acceptable | acceptable | acceptable | acceptable | acceptable | acceptable | acceptable |

EP 1 970 406 B1

13

Table IV

| | | Example 15 | Example 16 | Example 17 | Example 18 | Example 19 | Example 20 | Comparative Example 7 | Comparative Example 8 |
|---|---|---|---|---|---|---|---|---|---|
| Combination | Ethylene ionomer resin ①*1 | | | | | | | | |
| | Ethylene ionomer resin ② * 2) | | | | 100 | | 100 | | |
| | EMAA *10) | 100 | 100 | | | 100 | | | 100 |
| | EMMA *11) | | | | | | | 100 | |
| | EAA + 12) | | | 100 | | | | | |
| | Organo clay ① * 7) | 10 | 10 | 10 | 10 | 10 | | 10 | 10 |
| | Organo clay ② * 13) | | | | | | | | |
| | Organo clay ③ * 14) | | | | | | | | |
| | Organo clay ④ * 15) | | | | | | 10 | | |
| | Zinc oxide * 16) | 7 | | 11 | 10 | 10 | | | |
| | magnesium hydroxide * 17) | | 5 | | | | | | |
| | Antioxidant * 9) | 1 | 1 | 1 | 1 | 1 | 1 | 1 | 1 |
| Property | Neutralization degree | 65% | 85% | 95% | 70% | 65% | 70% | 0% | 0% |
| | Extrusion line speed (m/min) | 150 | 150 | 150 | 150 | 150 | 150 | 150 or less | 150 or less |

(continued)

| | | Example 15 | Example 16 | Example 17 | Example 18 | Example 19 | Example 20 | Comparative Example 7 | Comparative Example 8 |
|---|---|---|---|---|---|---|---|---|---|
| | Contraction temperature (°C) | 100 | 100 | 100 | 90 | 90 | 90 | 100 | 90 |
| | Elastic modulus MPa | 460 | 480 | 450 | 640 | 490 | 280 | 90 | 200 |
| | Elongation (%) | 290 | 300 | 280 | 320 | 260 | 320 | 700 | 550 |
| | Rigidity test | acceptance | acceptance | acceptance | acceptance | acceptance | acceptance | failure | failure |
| | Contraction ratio in the longitudinal direction (%) | 1 | 3 | 2 | 1 | 2 | 3 | 4 | 4 |
| | Resistance to Electrolytic solutions | acceptable | acceptable | acceptable | acceptable | acceptable | acceptable | failure | acceptable |
| | transparency | acceptable | acceptable | acceptable | opacity | opacity | acceptable | opacity | transparence |

(Footnote) (*10) Ethylene-methacrylic acid copolymer: NUCREL (registered trademark) N1525, made by DuPont Mitsui Polychemicals Co., Ltd.

(*11) Ethylene methyl methacrylate copolymer: Acryft (registered trademark) WH401, made by Sumitomo Chemical Co., Ltd.

(*12) Ethylene-acrylic acid copolymer: Primacor (registered trademark) 59801 made by The Dow Chemical Company.

(*13) Organo clay (Organic compound for intercalation: dimethyl distearyl benzyl dimethyl stearyl ammonium chloride, particle size: 8 $\mu$m): Nanofil 5, made by Sud-Chemie Inc.

(*14) Organo clay (Organic compound for intercalation: benzyl dimethyl stearyl ammonium chloride, particle size: 30 $\mu$m): Nanofil 32, made by Sud-Chemie Inc.

(*15) Organo clay (Organic compound for intercalation: trimethyl stearyl ammonium chloride): S-BEN (registered trademark) E, made by Hojun Co., Ltd.

(*16) Zinc oxide 1: made by Hakusui Tech Co., Ltd.

(*17) Average particle size: 0.8 pm, synthetic magnesium hydroxide.

As shown in Table III, heat-shrinkable tubes (Examples 7 to 10) made of ionomer resin compositions in which organo clay was mixed at a ratio of 2 to 60 weight parts to 100 weight parts of ethylene ionomer resin hardly shrank in the longitudinal direction while keeping a contraction temperature of 110°C or less. In addition, the heat-shrinkable tubes exhibited high initial stage elongation and such a high elastic modulus as to pass the rigidity test. Moreover, the heat-shrinkable tubes had satisfactory properties with respect to transparency and resistance to an electrolytic solution. It is also understood that various characteristics were satisfied similarly even in the cases where the organo clay had a different particle size and a different organic compound for intercalation (Examples 11 and 12).

In Examples 13 and 14, in which organo clay and metal salts (zinc oxide, magnesium hydroxide) were mixed in the ethylene ionomer resin so as to enhance neutralization degree, the elastic modulus improved and moreover the extrusion line speed improved.

Examples 15 to 19 are the cases in which ionomer resin compositions and heat-shrinkable tubes were prepared by mixing organo clay, metal salts, and ethylene copolymers having carboxyl groups. It is recognized, as shown in Table IV, that high neutralization degree can be achieved by mixing organo clay and metal salts with the ethylene copolymers having carboxyl groups and that various characteristics are satisfied. In Examples 18 and 19 in which metal salts were added in an excessive amount, the transparency is lost but the other characteristics are satisfied.

In Example 20, which is a case where organo clay that includes trimethyl stearyl ammonium chloride as an organic compound for intercalation is used, as compared with the case where dimethyl distearyl ammonium chloride or benzyl dimethyl stearyl ammonium chloride is used, the elastic modulus becomes a little lower because a sufficient distance cannot be obtained between layers of organo clay Accordingly, although the tube passed the rigidity test, the rigidity was rather low such that the tube failed to maintain its self-support several seconds after the test.

In Comparative Examples 7 and 8, the resin compositions failed to become ionomers, resulting in failure to achieve the necessary characteristics: Comparative Example 7 used ethylene-methyl methacrylate copolymers in which the carboxylic acid parts were methylated to be inactivated, and Comparative Example 8 used ethylene - methacrylic acid copolymers in which no metal salts were mixed and the carboxylic acid parts were not neutralized.

Industrial Applicability

The ionomer resin composition of the present invention, which is an ionomer resin composition according to claim 1 of the claims appended hereto, can be used as a material having the following properties: when a tubular shaped article is made by extruding the above-mentioned ionomer resin composition, the tubular shaped article has rigidity sufficient for allowing an automatic machine to perform the processes of covering over a lithium-ion battery to be covered therewith and the contraction thereof; the contraction processing can be completed at low temperature of 120 °C or less; and superior resistance to an electrolytic solution.

**Claims**

1. An ionomer resin composition consisting of an ethylene ionomer resin and organo clay, and optionally one or more of a polyfunctional monomer, an antioxidant, a flame retardant, an ultraviolet absorber, a light stabilizer, a heat stabilizer, a lubricant and a coloring agent, the content of the organo clay being 2 weight % or more and 60 weight % or less relative to the whole ionomer resin composition, wherein:

   the ethylene ionomer resin comprises ethylene copolymers having carboxyl groups in the molecules, all or a part of carboxyl groups being neutralized by metal ions, the metal ions being at least one kind selected from the group consisting of zinc ion, sodium ion, magnesium ion and calcium ion;
   the polyfunctional monomer is trimethylolpropane trimethacrylate or triallyl-isocyanurate;
   the ethylene coplymers having carboxyl groups in the molecules are ethylene-acrylic acid copolymers or ethylenemethacrylic acid copolymers; and
   the content of the carboxyl groups in the ethylene copolymers having carboxyl groups in the molecules is in the range of from 0.5 to 50 mol%.

2. An ionomer resin composition according to claim 1, wherein an organic compound for the intercalation of the organo clay is either or both of dimethyl distearyl ammonium chloride and benzyl dimethyl stearyl ammonium chloride.

3. An ionomer resin composition according to claim 1, wherein 55 % or more of the carboxyl groups in the ionomer resin composition are neutralized with the metal ions.

4. An extrusion shaped article formed by extruding the ionomer resin composition defined in any of claims 1 to 3 using a melt-extrusion molding machine, wherein the ionomer resin composition is made by mixing organo clay, a metal salt having the metal ions, and the ethylene copolymers having carboxyl groups in the molecules, these materials being melted and blended together.

5. A tubular shaped article formed by extruding in a tubular form the above-mentioned ionomer resin composition defined in any of claims 1 to 3 using a melt-extrusion molding machine, wherein the ionomer resin composition is made by mixing organo clay, a metal salt having the metal ions, and the ethylene copolymers having carboxyl groups in the molecules, these materials being melted and blended together.

6. A heat-shrinkable tube made by radially expanding, under heated conditions at a temperature of the melting point of the tubular shaped article or higher, the tubular shaped article of claim 5 by a method of introducing compression air into the tubular space thereof and by fixing the expanded shape thereof by means of cooling.

7. A heat-shrinkable tube made by the steps of:

cross-linking the ionomer resin composition by means of irradiating an ionizing radiation to the tubular shaped article of claim 5;
thereafter radially expanding, under heated conditions at a temperature of the melting point of the tubular shaped article or higher by a method of introducing compression air into the tubular space thereof, the tubular shaped article; and
fixing the expanded shape thereof by means of cooling wherein the ionizing radiation source is electron beams and the dose of electron beams is 30 - 500 kGy.

**Patentansprüche**

1. Ionomerharzzusammensetzung, bestehend aus einem Ethlyen-Ionomerharz und Organo-Ton und optional einem oder mehr von einem polyfunktionalen Monomer, einem Antioxidans, einem Flammhemmer, einem UV-Absorber, einem Lichtstabilisator, einem Wärmestabilisator, einem Gleitmittel und einem Färbemittel, worin der Gehalt des Organo-Tons 2 Gew.% oder mehr und 60 Gew.% oder weniger beträgt, relativ zur gesamten Ionomerharzzusammensetzung, worin:

das Ethylen-Ionomerharz Ethylen-Copolymere, die Carboxylgruppen in den Molekülen aufweisen, umfasst, wobei alle oder ein Teil der Carboxylgruppen durch Metallionen neutralisiert sind, wobei die Metallionen mindestens eine Art sind, ausgewählt aus der Gruppe bestehend aus Zinkionen, Natriumionen, Magnesiumionen und Kalziumionen;
wobei das polyfunktionale Monomer Trimethylolpropantrimethacrylat oder Triallyl-Isocyanurat ist;
worin die Ethylen-Copolymere, die Carboxylgruppen in den Molekülen aufweisen, Ethylen-Acrylsäure-Copolymere oder Ethylen-Methacrylsäure-Copolymere sind; und
worin der Gehalt der Carboxylgruppen in den Ethylen-Copolymeren, die Carboxylgruppen in den Molekülen aufweisen, im Bereich von 0,5 bis 50 Mol% liegt.

2. Ionomerharzzusammensetzung gemäß Anspruch 1, worin eine organische Verbindung für die Einlagerung des Organo-Tons entweder eines oder beides von Dimethyldistearylammoniumchlorid und Benzyldimethylstearylammoniumchlorid ist.

3. Ionomerharzzusammensetzung gemäß Anspruch 1, worin 55 % oder mehr der Carboxylgruppen in der Ionomerharzzusammensetzung mit den Metallionen neutralisiert sind.

4. Extrusionsgeformter Artikel, gebildet durch Extrudieren der Ionomerharzzusammensetzung, wie sie in irgendeinem der Ansprüche 1 bis 3 definiert ist, unter Verwendung einer Schmelzextrusions-Formmaschine, worin die Ionomerharzzusammensetzung hergestellt ist durch Mischen von Organo-Ton, einem Metallsalz, das die Metallionen aufweist, und den Ethylen-Copolymeren, die Carboxylgruppen in den Molekülen aufweisen, wobei diese Materialien miteinander verschmolzen und vermischt werden.

5. Röhrenförmiger Artikel, gebildet durch Extrudieren der vorstehend erwähnten Ionomerharzzusammensetzung, wie in irgendeinem der Ansprüche 1 bis 3 definiert, in einer Röhrenform unter Verwendung einer Schmelzextrusions-Formmaschine, worin die Ionomerharzzusammensetzung hergestellt durch Mischen von Organo-Ton, einem Metallsalz, das die Metallionen aufweist, und den Ethylen-Copolymeren, die Carboxylgruppen in den Molekülen aufweisen, wobei diese Materialien geschmolzen und miteinander vermischt werden.

**6.** Wärmeschrumpfbare Röhre, hergestellt durch radiales Expandieren unter erwärmten Bedingungen bei einer Temperatur des Schmelzpunkts des röhrenförmigen Artikels oder höher des röhrenförmigen Artikels von Anspruch 5 durch ein Verfahren, in dem Druckluft in den röhrenförmigen Raum hiervon eingeführt wird und durch Fixieren der expandierten Form hiervon mittels Kühlen.

**7.** Wärmeschrumpfbare Röhre, hergestellt durch die Schritte:

Vernetzen der Ionomerharzzusammensetzung mittels Bestrahlen des röhrenförmigen Artikels gemäß Anspruch 5 mit ionisierender Strahlung;
danach radiales Expandieren des röhrenförmigen Artikels unter erwärmten Bedingungen bei einer Temperatur des Schmelzpunkts des röhrenförmigen Artikels oder höher durch ein Verfahren zum Einführen von Druckluft in den röhrenförmigen Raum hiervon; und
Fixieren der expandierten Form hiervon mittels Kühlen, worin die ionisierende Strahlungsquelle Elektronenstrahlen sind und die Dosis der Elektronenstrahlen 30 bis 500 kGy beträgt.

## Revendications

**1.** Composition de résine ionomère consistant en une résine ionomère de l'éthylène et une organo-argile, et éventuellement un ou plusieurs d'un monomère polyfonctionnel, d'un antioxydant, d'un ignifugeant, d'un absorbeur d'ultraviolets, d'un stabilisant à la lumière, d'un stabilisant à la chaleur, d'un lubrifiant et d'un agent colorant, la teneur de l'organo-argile étant 2 % en poids ou plus et 60 % en poids ou moins par rapport à l'ensemble de la composition de résine ionomère, où :

la résine ionomère de l'éthylène comprend des copolymères de l'éthylène ayant des groupes carboxyle dans les molécules, tout ou partie des groupes carboxyle étant neutralisés par des ions métalliques, les ions métalliques étant au moins un type choisi dans le groupe consistant en un ion zinc, un ion sodium, un ion magnésium et un ion calcium ;
le monomère polyfonctionnel est le triméthacrylate de triméthylolpropane ou l'isocyanurate de triallyle ;
les copolymères de l'éthylène ayant des groupes carboxyle dans les molécules sont des copolymères éthylène-acide acrylique ou des copolymères éthylène-acide méthacrylique ; et
la teneur des groupes carboxyle dans les copolymères de l'éthylène ayant des groupes carboxyle dans les molécules est dans la plage de 0,5 à 50 mol%.

**2.** Composition de résine ionomère selon la revendication 1, où un composé organique pour l'intercalation de l'organo-argile est l'un ou l'autre ou les deux du chlorure de diméthyldistéarylammonium et du chlorure de benzyldiméthylstéarylammonium.

**3.** Composition de résine ionomère selon la revendication 1, où 55 % ou plus des groupes carboxyle dans la composition de résine ionomère sont neutralisés avec les ions métalliques.

**4.** Article mis en forme par extrusion formé par extrusion de la composition de résine ionomère définie dans l'une quelconque des revendications 1 à 3 au moyen d'une machine de moulage par extrusion à l'état fondu, où la composition de résine ionomère est formée par mélange d'une organo-argile, d'un sel métallique ayant les ions métalliques et des copolymères de l'éthylène ayant des groupes carboxyle dans les molécules, ces matériaux étant fondus et mélangés ensemble.

**5.** Article mis en forme tubulaire formé par extrusion dans une forme tubulaire de la composition de résine ionomère mentionnée ci-dessus définie dans l'une quelconque des revendications 1 à 3 au moyen d'une machine de moulage par extrusion à l'état fondu, où la composition de résine ionomère est formée par mélange d'une organo-argile, d'un sel métallique ayant les ions métalliques et des copolymères de l'éthylène ayant des groupes carboxyle dans les molécules, ces matériaux étant fondus et mélangés ensemble.

**6.** Tube thermorétractable produit par expansion radiale, dans des conditions chauffées à une température du point de fusion de l'article mis en forme tubulaire ou supérieure, de l'article mis en forme tubulaire selon la revendication

par un procédé d'introduction d'air comprimé dans son espace tubulaire et par fixation de sa forme expansée par refroidissement.

7. Tube thermorétractable produit par les étapes de :

réticulation de la composition de résine ionomère par irradiation d'un rayonnement ionisant sur l'article mis en forme tubulaire selon la revendication 5 ;
puis expansion radiale, dans des conditions chauffées à une température du point de fusion de l'article mis en forme tubulaire ou supérieure par un procédé d'introduction d'air comprimé dans son espace tubulaire, de l'article mis en forme tubulaire ;
et
fixation de sa forme expansée par refroidissement, où la source de rayonnement ionisant est des faisceaux d'électrons et la dose de faisceaux d'électrons est 30 - 500 kGy.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004099316 A1
- US 6117932 A
- WO 2006080716 A1
- JP 8259704 B
- JP H8259704 B